# EUROPÄISCHE PATENTSCHRIFT

(11) **EP 0 591 964 B1**
(45) Veröffentlichungstag und Bekanntmachung des Hinweises auf die Patenterteilung: **04.09.1996**
(21) Anmeldenummer: 93116237.4
(22) Anmeldetag: 07.10.1993
(51) Int. Cl.: B62B 3/10

(54) **Transportwagen**
Trolley
Chariot de transport

(30) Priorität: 07.10.1992 DE 9213464 U; 01.12.1992 DE 9216311 U
(43) Veröffentlichungstag der Anmeldung: 13.04.1994
(73) Patentinhaber: Wanzl GmbH & Co. Entwicklungs-KG, D-89336 Leipheim (DE)
(72) Erfinder: Ertle, Karl, D-89129 Langenau (DE); Wanzl, Rudolf, D-89340 Leipheim (DE)

(56) Entgegenhaltungen:
- US-A- 3 168 329
- US-A- 5 149 114

## Beschreibung

Die Erfindung betrifft einen auf Fördereinrichtungen transportierbaren, in einen weiteren gleichen Wagen einschiebbaren Transportwagen, mit einem trapezförmigen Fahrgestell, mit einer auf dem Fahrgestell befindlichen und zum bevorzugten Abstellen von Gepäck bestimmten Abstellfläche, mit an der Rückseite und beidseitig am Fahrgestell angebrachten, nach oben gerichteten Holmen, die eine Schiebegriffanordnung und wahlweise eine weitere Abstelleinrichtung tragen, wobei Sicherungsmittel vorgesehen sind, die ein Arretieren des Transportwagens auf der Fördereinrichtung ermöglichen.

Transportwagen dieser oder ähnlicher Art sind z.B. durch die deutschen Patentschriften DE 25 34 322.2, DE 28 12 050.0 und DE 36 30 473.5 näher beschrieben. Alle diese Transportwagen sind in der Praxis eingesetzt worden.

Im Sinne der allgemeinen Weiterentwicklung eines gattungsgemäßen Transportwagens und deshalb ohne näher auf den eben erwähnten Stand der Technik eingehend, schlägt die Erfindung einen Transportwagen vor, bei dem an den Holmen befestigte und in Schieberichtung des Transportwagens sich erstreckende Wandelemente vorgesehen sind, die an ihren vorderen freien Enden durch wenigstens eine höher als die Abstellfläche angeordnete Querstrebe verbunden sind, daß zwischen den Holmen durch Zwischenräume getrennte Anschläge ortsfest angeordnet sind, die zusammen mit den Wandelementen, der wenigstens einen Querstrebe und den Holmen eine Umrandung für das auf der Abstellfläche abzustellende Gepäck bilden, und daß die Anschläge außerhalb jener Räume liegen, die von den Wandelementen und von der wenigstens einen Querstrebe eines Transportwagens dann beansprucht werden, wenn dieser Transportwagen in einen vorausbefindlichen Transportwagen eingeschoben wird.

Durch die Erfindung wird ein Transportwagen geschaffen, dessen Abstellfläche ziemlich tief angeordnet werden kann und bei dem das Gepäck optimal nach allen vier Seiten abgestützt ist.
Im Sinne einer Erweiterung der Erfindung wird vorgeschlagen, zwischen den beiden Wandelementen eine Zwischenwand vorzusehen, die ebenfalls in Schieberichtung des Transportwagens verläuft. Dadurch werden nicht nur zwei Fächer für abzustellendes Gepäck geschaffen, sondern man verhindert ein Überladen des Transportwagens mit Gepäck dann, wenn die obere Begrenzung der Zwischenwand höher angeordnet ist, als die obere Begrenzung der beiden seitlich angeordneten Wandelemente.

Anhand einer räumlichen Darstellung wird der neue Transportwagen näher beschrieben.

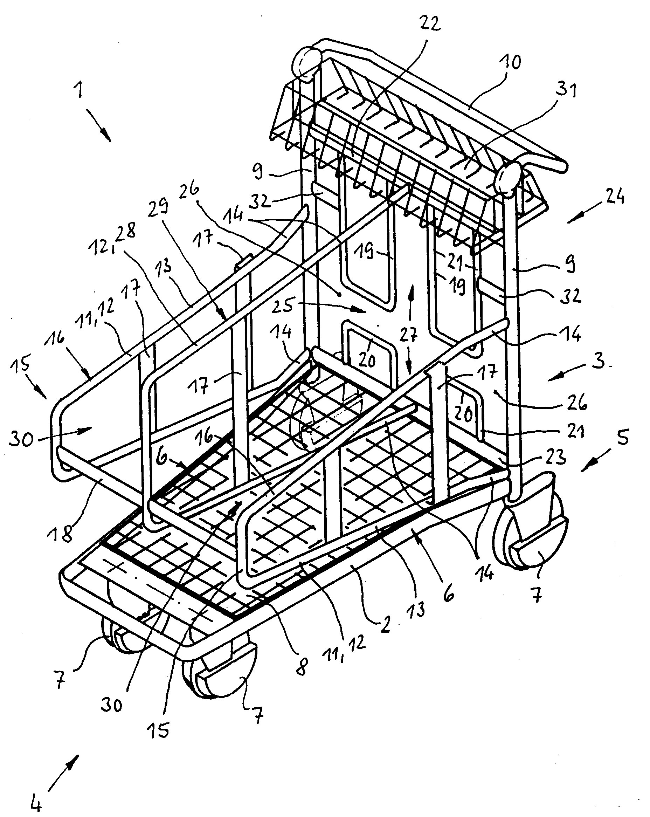

Der Transportwagen 1 weist ein trapezförmiges Fahrgestell 2 auf, dessen von oben betrachtet und auf eine gemeinsame Ebene bezogene längere Seite 3 fehlt. Diese bekannte Fahrgestellform ermöglicht ein platzsparendes Ineinanderschieben der Transportwagen 1. Das Fahrgestell 2 trägt eine platten- oder rostförmige Abstellfläche 8, die starr und daher leicht schräg oder aber schwenkbar angeordnet sein kann. Am vorderen schmäleren und hinteren breiteren Ende 4, 5 des Fahrgestelles 2 sind Rollen 7 angeordnet. Am hinteren Ende 5 des Fahrgestelles 2 und an dessen Längsträgern 6 befestigt erstrecken sich zwei Holme 9 nach oben, die eine Schiebeeinrichtung 10 tragen. Die Schiebeeinrichtung 10 kann starr, oder schwenkbar ausgeführt, mit einer auf die hinteren Rollen 7 wirkenden, nicht näher dargestellten Bremseinrichtung verbunden sein. Nahe der Schiebeeinrichtung 10 und zwischen den Holmen 9 angeordnet ist es möglich, eine weitere Abstelleinrichtung 31 etwa in Form eines korbähnlichen Behältnisses vorzusehen. Der Transportwagen 1 ist mit bekannten Feststelleinrichtungen ausgestattet, die ein selbsttätiges Arretieren des Transportwagens 1, z.B. auf Rolltreppenstufen ermöglichen. Alle bis hierher geschilderten technischen Merkmale des Transportwagens 1 sind bekannt. Eine ausführliche Beschreibung erübrigt sich daher. Neu sind die beiden Wandelemente 11, die an den Holmen 9 ortsfest angeordnet sind und sich in Schieberichtung des Transportwagens 1 freitragend erstrecken, so daß zwischen der Ablagefläche 8 und den Wandelementen 11 ein Zwischenraum gebildet ist. Aus Gründen der Materialersparnis sind die Wandelemente 11 beispielsweise aus einem U- oder V-förmig gestalteten, liegend angeordneten Rohrbügel 12 gefertigt und mit ihren beiden Schenkelenden 14 an je einem Holm 9 angeschweißt. Die Schenkel 13 eines jeden Wandelementes 11 sind im Beispiel durch zwei vertikal angeordnete Stäbe 17 verbunden. Diese einfache Art der Gestaltung der Wandelemente 11 genügt im Grunde; gilt es doch lediglich, das auf der Abstellfläche 8 abgestellte Gepäck zur Seite hin mit einfachen Mitteln zu begrenzen. An ihren vorderen freien Enden 15 sind die Wandelemente 11 durch wenigstens eine bevorzugt rohrförmige, höher als die Abstellfläche 8 angeordnete Querstrebe 18 verbunden. Die Querstrebe 18 dient dann als Anschlag für das Gepäck, wenn der Transportwagen 1 auf einer Fördereinrichtung nach unten befördert wird. Um zu verhindern, daß das Gepäck bei Aufwärtsfahrt des Transportwagens 1, z.B. auf einer Rolltreppe, nach hinten vom Transportwagen 1 fällt, sind zwischen den Holmen 9 bevorzugt bügelförmige Anschläge 19, 20 ortsfest angeordnet und zwar zwei nach oben gerichtete untere Anschläge 20, die mit ihren Schenkeln 21 auf einem geringfügig höher als die Ablagefläche 8 angeordneten, die Holme 9 verbindenden unteren Querstab 23 angeschweißt sind, sowie zwei von oben nach unten sich erstreckende obere Anschläge 19, die ebenfalls mit ihren Schenkeln 21 an einen weiteren, knapp unterhalb der weiteren Abstelleinrichtung 31 befindlichen und ebenfalls die Holme 9 verbindenden oberen Querstab 22 befestigt sind. Die oberen Anschläge 19 können wie dargestellt, mit Hilfe von Stegen 32 gegenüber den Holmen 9 zusätzlich abgestützt sein. Die Anschläge 19, 20 -und wenn vorhanden, auch die Stege 32- sind außerhalb jener Räume angeordnet, die von den Wandelementen 11 und der wenigstens einen Querstrebe 18 dann beansprucht werden, wenn der Transportwagen 1 in einen vorausbefindlichen Transportwagen 1 eingeschoben wird. Die Projektion dieser Räume auf eine vertikale Fläche ist aus der Anordnung der Anschläge 19, 20, die sich auf einer bevorzugt senkrechten Ebene 24 befinden, ersichtlich. So ist durch die wenigstens eine Querstrebe 18 ein horizontal sich erstreckender Zwischenraum 25 zwischen den oberen und den unteren Anschlägen 19, 20 erforderlich. Ebenso sind zwischen den beiden Holmen 9 je ein vertikal angeordneter Zwischenraum 26 notwendig, damit die Wandelemente 11 eines rückwärtigen Transportwagens 1 bei dessen Einschieben in einen vorausbefindlichen Transportwagen 1 freie Bahn besitzen. Wie aus der Zeichnung ersichtlich, kann im Rahmen einer Erweiterung der Erfindung zwischen den beiden Wandelementen 11 eine vertikal angeordnete Zwischenwand 28 vorgesehen sein, die zwischen den beiden Wandelementen 11 in Verbindung mit der wenigstens einen Querstrebe 18 und den Anschlägen 19, 20 zwei Fächer 30 entstehen läßt, die zur Aufnahme von Gepäck dienen. Die Zwischenwand 28 besteht ebenfalls aus einem U- oder V-förmigen Rohrbügel 12, der mit seinen Schenkelenden 14 am oberen und am unteren Querstab 22, 23 angeschweißt und zusätzlich mit der wenigstens einen Querstrebe 18 ortsfest verbunden ist. Die Schenkel 13 des Rohrbügels 12 sind im Beispiel ebenfalls durch wenigstens einen vertiakel angeordneten Stab 17 verbunden. Um ein Überladen des Transportwagens 1 zu vermeiden, oder zumindest zu erschweren, erweist es sich als zweckmäßig, die obere Begrenzung 29 der Zwischenwand 28 höher anzuordnen, als die obere Begrenzung 16 der Wandelemente 11. Dadurch werden zwischen den erwähnten oberen Begrenzungen 16, 29 zwei dachförmige Ebenen gebildet, die ein Beladen der oberen Begrenzungen 16, 29 der Wandelemente 11 und der Zwischenwand 28 mit Gepäck verhindern. Wird dies trotzdem versucht, fällt das Gepäck zur Seite nach unten. Damit Transportwagen 1, die mit Zwischenwänden 28 ausgestattet sind, ebenfalls platzsparend ineinandergeschoben werden können, ist mittig zwischen den oberen und zwischen den unteren Anschlägen 19, 20 ein vertikal angeordneter Zwischenraum 27 gebildet, der von der Zwischenwand 28 eines rückwärtigen Transportwagens 1, der in einen vorausbefindlichen Transportwagen 1 eingeschoben werden soll, beansprucht wird. Die Anschläge 19, 20 derart gestalteter Transportwagen 1 liegen also auch außerhalb jenes Raumes, den die Zwischenwand 28 eines Transportwagens 1 beim Einschiebevorgang in einen weiteren Transportwagen 1 benötigt.

Die Erfindung umfaßt nicht nur Transportwagen, die, wie eingangs zum Stand der Technik zählend, bevorzugt auf Rolltreppen beförderbar sind. Die Erfindung läßt sich auch auf Transportwagen übertragen, die auf Fahrsteigen nach DIN EN 115 oder auf sog. "Kettenförderern" transportierbar sind. Auf solche Kettenförderer wird z.B. in der DIN 32 601 Teil 2, Ausgabe August 1986 verwiesen. Während Transportwagen, die auf Fahrsteigen befördert werden, mit bekannten Fahrsteigrollen ausgestattet sind, die ein selbsttätiges Arretieren der Transportwagen auf einem Fahrsteig ermöglichen, weisen Transportwagen, die zum Transport mit Kettenförderern bestimmt sind, Mitnehmerelemente auf, die in bekannter Weise entweder Teil des Fahrgestelles oder an diesem zusätzlich angebracht sind. Alle Mittel also, die einen Transport eines erfindungsgemäßen Transportwagens je nach Anwendungsfall entweder auf einer Rolltreppe, oder auf einem Fahrsteig, oder auf einem Kettenförderer ermöglichen, sind bekannt, so daß hier auf eine ausführliche Beschreibung dieser Mittel verzichtet werden kann.

## Patentansprüche

1. Auf Fördereinrichtungen transportierbarer, in einen weiteren gleichen Wagen einschiebbarer Transportwagen, mit einem trapezförmigen Fahrgestell, mit einer auf dem Fahrgestell befindlichen und zum bevorzugten Abstellen von Gepäck bestimmten Abstellfläche, mit an der Rückseite und beidseitig am Fahrgestell angebrachten, nach oben gerichteten Holmen, die eine Schiebegriffanordnung und wahlweise eine weitere Abstelleinrichtung tragen, wobei Sicherungsmittel vorgesehen sind, die ein Arretieren des Transportwagens auf der Fördereinrichtung ermöglichen, dadurch **gekennzeichnet,** daß an den Holmen (9) befestigte und in Schieberichtung des Transportwagens (1) sich erstreckende Wandelemente (11) vorgesehen sind, die an ihren vorderen freien Enden (15) durch wenigstens eine höher als die Abstellfläche (8) angeordnete Querstrebe (18) verbunden sind, daß zwischen den Holmen (9) durch Zwischenräume (25, 26) getrennte Anschläge (19, 20) ortsfest angeordnet sind, die zusammen mit den Wandelementen (11), der wenigstens einen Querstrebe (18) und den Holmen (9) eine Umrandung für das auf der Abstellfläche (8) abzustellende Gepäck bilden, wobei die Anschläge (19, 20) außerhalb jener Räume liegen, die von den Wandelementen (11) und von der wenigstens einen Querstrebe (18) eines Transportwagens (1) dann beansprucht werden, wenn dieser Transportwagen (1) in einen vorausbefindlichen Transportwagen (1) eingeschoben wird.

2. Transportwagen nach Anspruch 1, dadurch **gekennzeichnet,** daß die Wandelemente (11) aus je einem U- oder V-förmigen Rohrbügel (12) gefertigt und mittels ihrer Schenkel (13) an den Holmen (9) ortsfest befestigt sind.

3. Transportwagen nach Anspruch 1 oder 2, dadurch **gekennzeichnet,** daß die Wandelemente (11) senkrecht angeordnete, die Schenkel (13) verbindende Stäbe (17) aufweisen.

4. Transportwagen nach einem der Ansprüche 1 bis 3, dadurch **gekennzeichnet,** daß die oberen Anschläge (19) an einem oberen, die Holme (9) verbindenden Querstab (22) und die unteren Anschläge (20) an einem unteren, ebenfalls die Holme (9) verbindenden und höher als die Abstellfläche (8) angeordneten Querstab (23) ortsfest befestigt sind.

5. Transportwagen nach Anspruch 4, dadurch **gekennzeichnet,** daß die Anschläge (19, 20) bügelförmig gestaltet und mit ihren Schenkeln (21) an den Querstäben (22, 23) befestigt sind.

6. Transportwagen nach einem der Ansprüche 1, 4 oder 5, dadurch **gekennzeichnet,** daß die oberen Anschläge (19) zusätzlich mit Hilfe von Stegen (32) an den Holmen (9) abgestützt sind.

7. Transportwagen nach einem der Ansprüche 1 bis 6, dadurch **gekennzeichnet,** daß zum Zwecke des Ineinanderschiebens durch die Anordnung der oberen und unteren Anschläge (19, 20) und, sofern vorhanden, der Stege (32), zwei vertikal sich erstreckende Zwischenräume (26) zum Durchschieben der Wandelemente (11) und ein horizontaler Zwischenraum (25) zum Durchschieben der wenigstens einen Querstrebe (18) eines weiteren Transportwagens (1) gebildet sind.

8. Transportwagen nach einem der Ansprüche 1 bis 7, dadurch **gekennzeichnet,** daß zwischen den Wandelementen (11) eine vertikal und ortsfest angeordnete Zwischenwand (28) vorgesehen ist.

9. Transportwagen nach Anspruch 8, dadurch **gekennzeichnet,** daß die Zwischenwand (28) durch einen U- oder V-förmigen Rohrbügel (12) gebildet ist, der mit seinen Schenkelenden (14) am oberen und unteren Querstab (22, 23) befestigt ist.

10. Transportwagen nach einem der Ansprüche 1, 8 oder 9, dadurch **gekennzeichnet,** daß die Zwischenwand (28) wenigstens einen senkrechten, die Schenkel (13) verbindenden Stab (17) aufweist.

11. Transportwagen nach einem der Ansprüche 1 bis 10, dadurch **gekennzeichnet,** daß die Zwischenwand (28) zusätzlich an der wenigstens einen Querstrebe (18) befestigt ist.

12. Transportwagen nach einem der Ansprüche 1 bis 11, dadurch **gekennzeichnet,** daß durch die Anordnung der Anschläge (19, 20) und, sofern vorhanden, der Stege (32), ein mittig angeordneter, vertikal sich erstreckender Zwischenraum (27) zum Durchschieben der Zwischenwand (28) eines weiteren Transportwagens (1) gebildet ist.

13. Transportwagen nach einem der Ansprüche 1 bis 12, dadurch **gekennzeichnet,** daß die obere Begrenzung (29) der Zwischenräume (28) höher angeordnet ist, als die obere Begrenzung (16) der Wandelemente (11).

## Claims

1. A trolley transportable on conveying apparatus and pushable into another, identical trolley, comprising a trapezoidal wheel frame, a deposit surface located on the wheel frame and preferably for depositing luggage, and uprights provided on the rear and on either side of the wheel frame, directed upwards and carrying a pushing arrangement and optionally a further deposit arrangement, wherein securing means are provided which enable the trolley to be secured on the conveying apparatus, characterised in that wall members (11), fixed to the uprights (9) and extending in the pushing direction of the trolley (1), are provided and are connected at their front free ends (15) by at least one crossbar (18) arranged higher than the deposit surface (8), in that stops (19, 20) separated by gaps (25, 26) are fixedly arranged between the uprights (9) and, together with the wall members (11), the at least one crossbar (18) and the uprights (9), form a boundary for the luggage to be deposited on the deposit surface (8), the stops (19, 20) being located outside those spaces taken up by the wall members (11) and the at least one crossbar (18) of a trolley (1) when this trolley (1) is pushed into a preceding trolley (1).

2. A trolley according to claim 1, characterised in that the wall members (11) are each formed from a U-shaped or V-shaped tubular frame (12) and are rigidly fixed to the uprights (9) by means of their arms (13).

3. A trolley according to claim 1 or 2, characterised in that the wall members (11) have vertically arranged posts (17) connecting the arms (13).

4. A trolley according to any one of claims 1 to 3, characterised in that the upper stops (19) are rigidly fixed to an upper crossbar (22) connecting the uprights (9) and the lower stops (20) are rigidly fixed to a lower crossbar (23) also connecting the uprights (9) and arranged higher than the deposit surface (8).

5. A trolley according to claim 4, characterised in that the stops (19, 20) are stirrup-shaped and are fixed by their arms (21) to the crossbars (22, 23).

6. A trolley according to any one of claims 1, 4 or 5, characterised in that the upper stops (19) are additionally supported on the uprights (9) by means of crosspieces (32).

7. A trolley according to any one of claims 1 to 6, characterised in that, for the purpose of pushing the trolleys inside one another, two vertically extending gaps (26) for pushing through the wall members (11) and a horizontal gap (25) for pushing through the at least one crossbar (18) of a further trolley (1) are formed by the arrangement of the upper and lower stops (19, 20) and, if provided, the crosspieces (32).

8. A trolley according to any one of claims 1 to 7, characterised in that a vertically and fixedly arranged partition (28) is provided between the wall members (11).

9. A trolley according to claim 8, characterised in that the partition (28) is formed by a U-shaped or V-shaped tubular frame (12) fixed by the ends (14) of its arms to the upper and lower crossbar (22, 23).

10. A trolley according to any one of claims 1, 8 or 9, characterised in that the partition (28) has at least one vertical post (17) connecting the arms (13).

11. A trolley according to any one of claims 1 to 10, characterised in that the partition (28) is also fixed to the at least one crossbar (18).

12. A trolley according to any one of claims 1 to 11, characterised in that a centrally arranged, vertically extending gap (27) for pushing through the partition (28) of a further trolley (1) is formed by the arrangement of the stops (19, 20) and, if provided, the crosspieces (32).

13. A trolley according to any one of claims 1 to 12, characterised in that the upper limit (29) of the spaces [sic - partitions] (28) is arranged higher than the upper limit (16) of the wall members (11).

## Revendications

1. Chariot transporteur pouvant être transporté sur des dispositifs de transport (tels que des escaliers roulants), emboîtable dans un autre chariot identique et possédant un châssis trapézoïdal, une surface de pose se trouvant sur le châssis et destinée de préférence à la pose de bagages, de même que, disposés à l'arrière et des deux côtés sur le châssis, des montants dirigés vers le haut et supportant un système de barre servant de poignée et d'élément de poussée et, facultativement, un dispositif de pose supplémentaire, des moyens de sécurité étant prévus pour permettre le blocage du chariot sur un dispositif de transport, **caractérisé** en ce qu'il comprend des éléments formant parois (11), fixés aux montants (9) et s'étendant dans la direction de poussée du chariot transporteur (1), éléments-parois qui sont reliés à leurs extrémités avant libres (15) par au moins une entretoise transversale (18) placée plus haut que la surface de pose (8), et que des butées (19, 20), séparées par des intervalles (25, 26), Sont disposées fixes entre les montants (9) et constituent, ensemble avec les éléments-parois (11), l'entretoise transversale (18) ou les entretoises transversales et les montants (9), une bordure pour les bagages à poser sur la surface de pose (8), les butées (19, 20) étant situées en dehors des espaces nécessaires au passage des éléments-parois (11) et de l'entretoise transversale (18) ou des entretoises transversales d'un autre chariot transporteur (1) lorsque celui-ci est emboîté dans le chariot transporteur (1) se trouvant devant lui.

2. Chariot transporteur selon la revendication 1, caractérisé en ce que les éléments-parois (11) sont formés chacun d'un étrier tubulaire (12) en U ou en V et sont fixés à demeure aux montants (9) par leurs branches (13).

3. Chariot transporteur selon la revendication 1 ou 2, caractérisé en ce que les éléments-parois (11) comportent des barreaux (17) orientés verticalement et reliant les branches (13) entre elles.

4. Chariot transporteur selon une des revendications 1 à 3, caractérisé en ce que les butées supérieures (19) sont fixées à demeure à une barre transversale (22) supérieure qui relie les montants (9) entre eux, et les butées inférieures (20) sont fixées à demeure à une barre transversale (23) qui relie également les montants (9) entre eux et est placée plus haut que la surface de pose (8).

5. Chariot transporteur selon la revendication 4, caractérisé en ce que les butées (19, 20) ont la forme d'étriers et sont fixées par leurs branches (21) aux barres transversales (22, 23).

6. Chariot transporteur selon une des revendications 1, 4 ou 5, caractérisé en ce que les butées supérieures (19) sont appuyées en outre à l'aide d'entretoises (32) aux montants (9).

7. Chariot transporteur selon une des revendications 1 à 6, caractérisé en ce que, aux fins de l'emboîtement mutuel, les butées supérieures et inférieures (19, 20), ainsi que les entretoises (32) dans la mesure où elles sont présentes, sont disposées de manière qu'elles délimitent deux intervalles (26) s'étendant verticalement pour le passage des éléments-parois (11) et un intervalle horizontal (25) pour le passage de l'entretoise transversale (18) ou des entretoises transversales d'un autre chariot transporteur (1).

8. Chariot transporteur selon une des revendications 1 à 7, caractérisé en ce qu'une cloison (28) est disposée verticalement et de manière fixe entre les éléments-parois (11).

9. Chariot transporteur selon la revendication 8, caractérisé en ce que la cloison (28) est formée par un étrier tubulaire (12) en U ou en V, qui est fixé par les extrémités (14) de ses branches aux barres transversales supérieure et inférieure (22, 23).

10. Chariot transporteur selon une des revendications 1, 8 ou 9, caractérisé en ce que la cloison (28) comporte au moins un barreau (17) vertical reliant les branches (13) entre elles.

11. Chariot transporteur selon une des revendications 1 à 10, caractérisé en ce que la cloison (28) est fixée en outre à au moins une entretoise transversale (18).

12. Chariot transporteur selon une des revendications 1 à 11, caractérisé en ce que les butées (19, 20) et, ainsi que les entretoises (32) dans la mesure où elles sont présentes, sont disposées de manière qu'elles délimitent un intervalle (27) situé au milieu et s'étendant verticalement pour le passage de la cloison (28) d'un autre chariot transporteur (1).

13. Chariot transporteur selon une des revendications 1 à 12, caractérisé en ce que la limite supérieure (29) de la cloison (28) est placée plus haut que la limite supérieure (16) des éléments-parois (11).
